# EUROPEAN PATENT APPLICATION

(11) **EP 1 906 615 A1**
(43) Date of publication of application: **02.04.2008**
(21) Application number: 06020614.1
(22) Date of filing: 29.09.2006
(51) Int. Cl.: H04L 29/06

(54) **Method and devices for delegating the control of protected connections**

(71) Applicant: Nokia Siemens Networks GmbH & Co. KG, 81541 München (DE)
(72) Inventor: Eisl, Jochen, 85748 Garching (DE); Gotthard, Peter, 63900 Brno (CZ); Pancocha, Ondrej, Dr., CZ-664 07 Pozorice (CZ); Pollak, Christoph, Dr., 1190 Wien (AT)

(57) **Abstract**

The invention proposes to use function delegation for controlling protected connections between end nodes (A, B). For this purpose, a trust relationship between a first end node (A) and an intermediate node is established, as well as a trust relationship between the intermediate node and a second end node (B). With the trust relationships in place, the intermediate node is requested to perform a control function for controlling a protected connection between the first and the second end node. The invention provides for more flexibility in network deployment. In particular, mobility of intermediate nodes is supported even in conjunction with secured or protected connections.

## Description

The invention relates to a method for controlling protected connections between end nodes as well as an end node and an intermediate node adapted for performing this method.

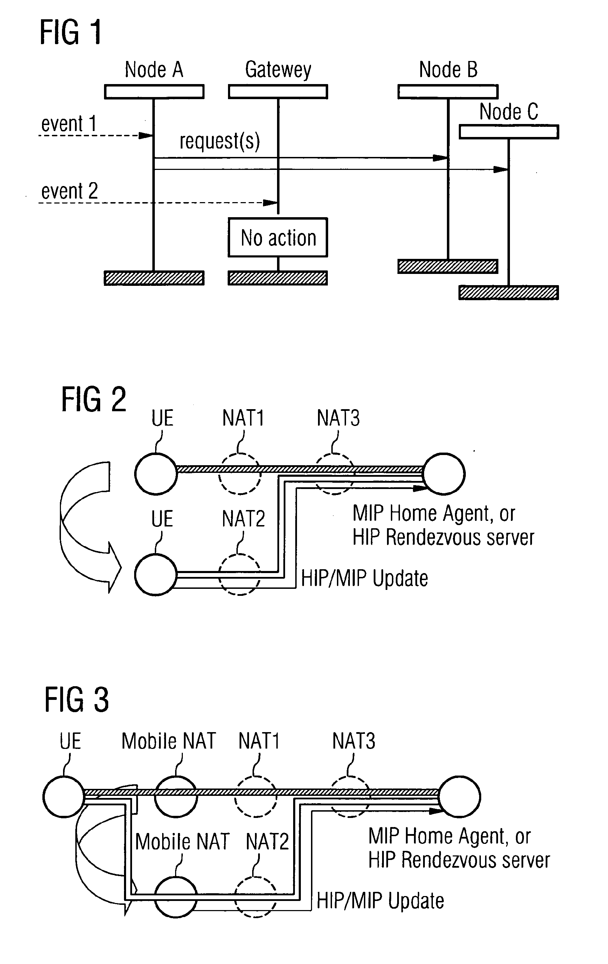

Modern networks often provide a security framework to protect data traffic against manipulation. Typically, end-to-end connections are secured via dedicated protocols. The protection of end-to-end connections can bring about certain rigidness with regard to data handling within a network. More specific, the mechanisms used to bar interference or manipulation along the secured connection also prevent changes or adaptations that work to the benefit of the data transport. This is shown in Fig. 1 in a generic way. Upon reception of an event (event 1) node A generates several requests which are sent to other nodes (Node B, Node C). The protocol securing the connection prevents intermediate gateways from intercepting the requests, so that the transport network cannot provide any additional service (e.g. protocol optimization). This is indicated by the event transmitted to the gateway (event 2) which does not lead to the sending of a request. As the gateway has no authorization to for further processing the event is aborted. The limitation of authorization protects the end nodes from sender manipulation.

In IP (Internet Protocol) networks, the most frequently deployed security protocol is IPsec. IPsec (IP security) is a standardized framework for securing IP communications by encrypting and/or authenticating each IP packet in a data stream. IPSec also provides for a secured end-to-end connection.

There are two modes of IPsec operation: transport mode and tunnel mode.

In transport mode only the payload (message) of the IP packet is encrypted. It is fully routable since the IP header is sent as plain text. However, it can not cross NAT interfaces, as this will invalidate its hash value. Transport mode is used for host-to-host communications over a LAN.

In tunnel mode, the entire IP packet is encrypted. It must then be encapsulated into a new IP packet for routing to work. Tunnel mode is used for network-to-network communications (secure tunnels between routers) or host-to-network and host-to-host communications over the Internet.

A more concrete example of the above-mentioned situation (Fig. 1) where security settings hamper a more efficient deployment of networks is the insufficient mobility support for gateways or intermediate nodes in IP networks with NAT transversal. NAT (Network Access Translation) is a mechanism that allows for an enlarged address space or for masking the origin address of senders behind a firewall. Usually, a NAT gateway intercepts traffic from a source and exchanges the address of origin for its own address. Incoming traffic is treated oppositely, i.e. the address of destination (i.e. the NAT gateway's address) is changed to the local address of the host the traffic is destined for.

IPsec is implemented by a set of cryptographic protocols for securing packet flows and Internet key exchange.

The IP protocol suite was enhanced by mobility support, e.g. by the MIP (Mobile IP) framework or the Host Identity Protocol (HIP). Principles of the former are laid down in RFC3344 (Ipv4) and RFCs 3775 and 3776 (IPv6). The main ideas behind the HIP can be drawn from [draft-ietf-hip-arch-03] and [draft-ietf-hip-base-05].

Both support the mobility of nodes. There are mechanisms, such as STUN (RFC 3489) that can be employed in conjunction with mobile end nodes that require NAT traversal. Fig. 2 illustrates this situation. Initially, an end node UE is connected to a gateway NAT1. Traffic sent to the end node UE is forwarded by the MIP home agent or HIP Rendevous server situated in the end node's home network. The end node is using a local address. The gateway NAT intercepts traffic to exchange this local address for its own address or to change the destination address of arriving packets to the local address of the end node UE. The connection is assumed to be protected via IPSec. Once the end node UE moves to another network the MIP or HIP settings are changed in order to set up a new secure connection. Again the end node is connected via a NAT device NAT2. The change of the IPsec connection is triggered by the end node UE. A change affecting intermediate nodes, however, can not trigger an adjustment of parameters relevant for the connection. Thus, mobility of intermediate nodes is not supported.

Fig. 3 shows a scenario where an intermediate node, i.e. the NAT device to which the end node is connected, is moved. In this case the IP address of the NAT device will change (e.g. new care-of-address for MIP). As the end device is not aware of this change traffic destined for the end node UE will not use the new address of the NAT gateway. The traffic can not be delivered. Neither Mobile IP with established security associations for the peers, nor HIP support mobility of a mobile router that performs a Network Address Translation (NAT). In this case, the IP address assigned to the end node UE never changes, so the end node UE is not aware of a movement.

The differences between mobility of end device and mobility of intermediate device as explained with reference to Fig. 2 and Fig. 3 is shown in more detail in Fig. 4. Fig. 4 shows nodes A and B. Node A has a local address. Traffic has to pass a NAT gateway.
(1) The mobile NAT is connected to the Internet and has obtained a global address. The node A connects to this NAT and is provided with a local address.
(2) After receiving an address the host sends a HIP/HIP location update message to a correspondent node or location register (Mobile IP home agent in the MIP case and Rendezvous Server for HIP). The NAT translates source address IP X → IP A.
(3) Incoming traffic is sent to IP address of node A, which was registered during location update. The NAT translates source address IP A → IP X.
(4) The mobile NAT connects to a second provider and obtains another global address. The mobile NAT performs handover, but the IP address assigned to UE is not changed.
(5) Incoming traffic is still sent to IP A, so it gets lost.

The binding updates should be sent by an intermediate gateway (mobile NAT), this, however, is prevented by the protocol design, i.e. by the security associations that have been established.

As defined in [RFC3775], standard binding updates (BU) between UE and its home agent (HA) shall be protected by IPSEC. More details on IPSEC secured MIPv6 are in [RFC 3776]. Binding updates between UE and its correspondent nodes (CN) need not to be protected via IPSEC. However, the method called "routability procedure" is used to assure that the right mobile node is sending the message.

As defined in [draft-ietf-hip-arch-03] and [draft-ietf-hip-base-05], HIP is used for authentication and negotiation of IPSEC security associations between communicating hosts. The use of IPSEC protection is optional, but if used the actual IP payload packets do not differ in any way from standard IPSEC protected IP packets.

Thus, the present mechanisms for end-to-end protection of data connections run counter an optimal exploitation of network resources, e.g. in terms of mobility support or protocol optimization.

The aim of the invention is to provide for a more flexible control of secured data connections.

The invention relies on the observation that a more flexible control of protected connections between end nodes is feasible if connection control functions can be assumed by an intermediate node, i.e. connection control for protected connection is not strictly limited to the end nodes. This extended connection control may not compromise the security of a connection. Hence, the present invention requires a trust relationship to be established between the intermediate node and each of the involved end nodes.

Trust relationships may be established via the exchange of credentials such as keys, certificates etc. Mechanisms for creating trust relationships are widely applied in many networks and can be readily applied for the present method.

Here, a node is referred to as intermediate node with respect to end nodes if control information for a protected connection between two of these end nodes could pass by this node. It is not necessary that this node is eventually chosen for transporting control information, nor is it necessary that user data (terms such as payload and bearer are also used in this context) pass by this node. An end node constitutes a data sink, a data source, or both.

A present method for controlling protected connections between end nodes requires an intermediate node to establish trust relationships with a first and a second end node. With trust relationships in place, the intermediate node is requested to perform a control function for controlling a protected connection between the first and the second end node. For instance, the intermediate node may be requested to perform a control function of a certain type for all connections of the first end node. The control function may comprise the sending of a message or request to the second node or to a plurality of nodes to cause a change of parameters or settings for traffic sent to the first node.

If, by assuming this control function the intermediate node acts on behalf of the first node or as proxy for the first node, then the assumption of the control function corresponds to a shift or delegation of the control function from the first end node to the intermediate end node.

The invention allows for shifting control functions for protected connections from end nodes to the network without endangering the safety of the protected connection and without breaking established security associations between communicating end node or peers. A more flexile control is provided which allows for more mobility in the network. In particular, mobility of intermediate nodes may be supported.

According to an embodiment of the invention explicit approval of the second node for the transfer of the control function to the intermediate node is required. In this case, a request is sent from the intermediate node to the second end node to obtain approval to perform the control function. Via a reply message the approval is given.

The request to perform a control function may be provided by the first node, i.e. the first node instructs the intermediate node to perform this function. Other szenarios are possible, too. According to an embodiment of the invention a request to perform the control function is passed on from a first intermediate node to a second intermediate node. The rationale behind this embodiment is to allow for shifting or delegating the task of performing the control function between intermediate nodes. Criteria for transferring the task may be load balancing or already existing trust relationships. A first intermediate node may transfer a control function to a second intermediate node because the assumption of the control function would require to set up trust relationships whereas the second intermediate node has already established the obligatory trust relationships. A first intermediate node may even do a search for the most appropriate intermediate node to assume the control function. It is desirable that a trust relationship exists between the first and the second intermediate node as not to have a missing link in the chain of trust.

The invention also comprises an end node and an intermediate node adapted for at least one of the embodiments of the present method. Such nodes need to support the assumption of a function by the intermediate node. The transfer of a function may be regarded as a kind of protocol that in a way complements the protocol used for protected connections (e.g. IPsec). The nodes (end node and intermediate node) according to this invention support or employ such a protocol. In particular, the establishment of trust relationships and the sending or receiving of a request to assume a control function are to be supported.

Below embodiments of the invention are described with reference to figures. The figures show
Fig. 1: State of the art signaling with protected connections
Fig. 2: A state of the art scenario where an end node is moved
Fig. 3: A state of the art scenario where an intermediate node is moved

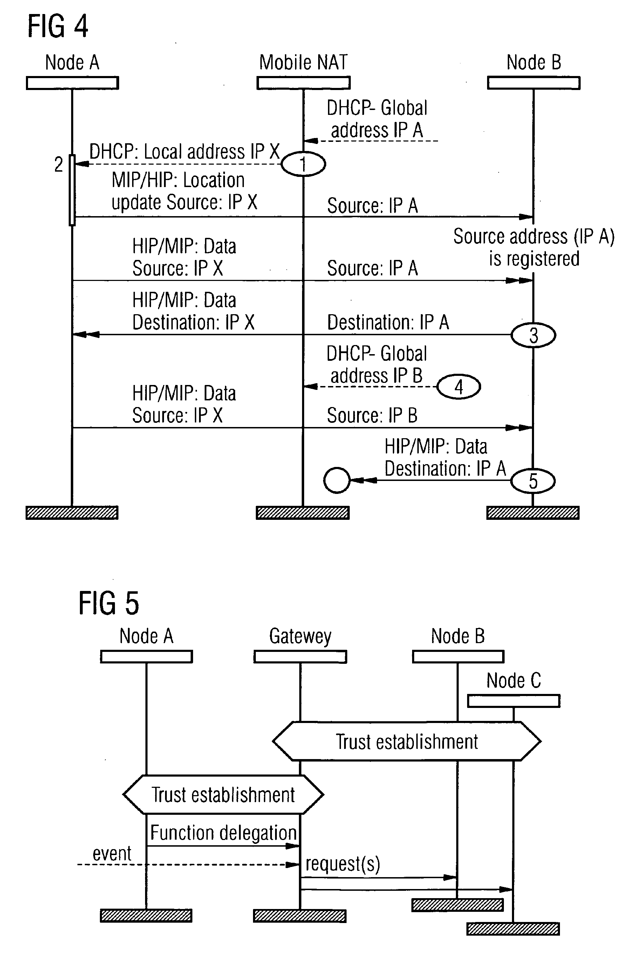

Fig. 4: A flow chart for the scenarios of Fig. 2 and Fig. 3

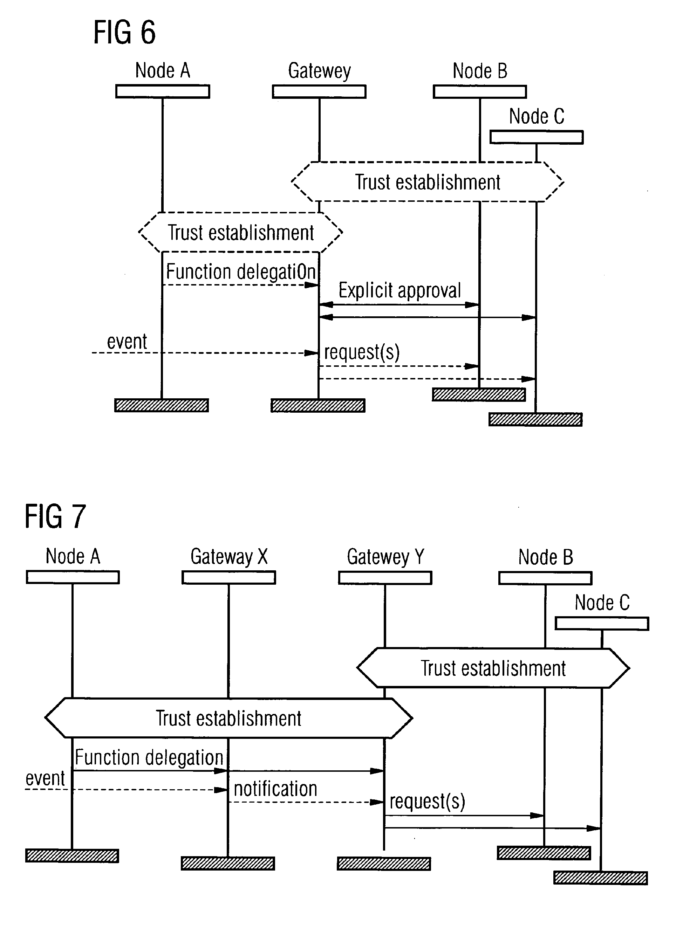

Fig. 5: Illustration of the invention's concept
Fig. 6: An embodiment with explicit approval of function transfer
Fig. 7: An embodiment with function transfer between intermediate nodes

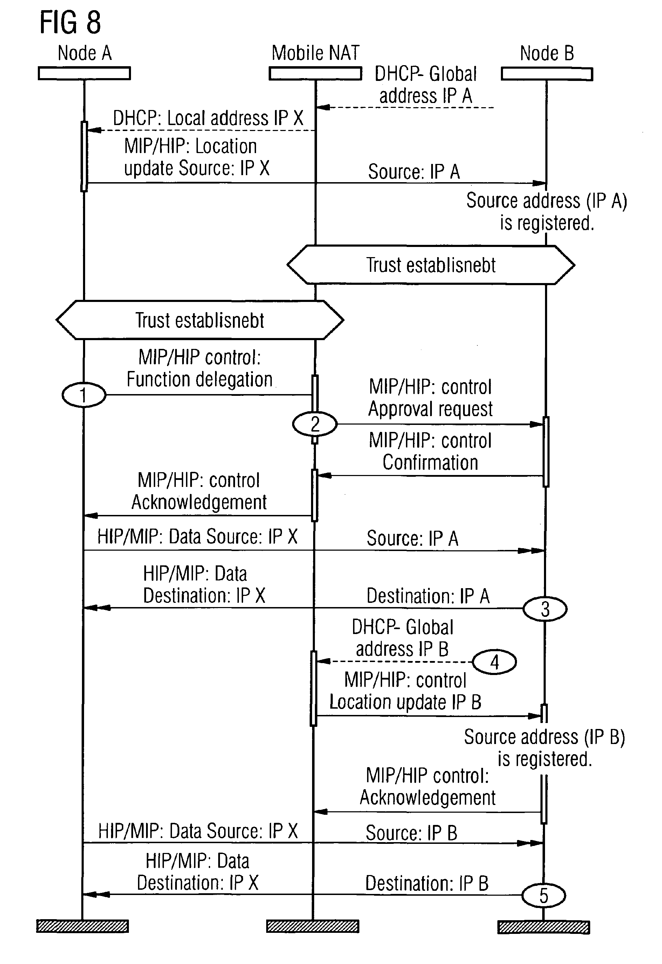

Fig. 8: A flow chart detailing how mobility support for intermediate nodes is provided according to the present invention.

As described in the introductory part, Fig. 1 to Fig. 4 demonstrate the deficiencies of the state of the art solutions.

Fig. 5 shows end nodes A, B, C and an intermediate node which represents a gateway. As a prerequisite for function delegation a trust relationship is built up between the gateway and the nodes A, B, and C. Such a mutual relationship may be established by exchanging certificates. The establishment of trust relationships is necessary to rule out manipulation, such as the gateway pretending to a different node when sending requests to nodes B and C. Once trust is established, the gateway may be made to assume control functions with regard to protected connections between node A the other nodes B and C. These control functions are shifted or delegated from node A to the gateway. This shift of function can be performed by specifying the functions to the gateway and by providing permission (authorization) to carry them through. The gateway needs to be enabled to perform the delegated functions, e.g. generating requests for this purpose.

Upon delegation of the function the gateway can handle events that require changing or adapting settings or parameters of the protected connection between node A and nodes B and C.

Fig. 6 shows an embodiment with explicit approval of the delegation of the function. The gateway sends a message to the nodes B and C to obtain the nodes approval to perform the function. This approval is communicated to the gateway.

Fig. 7 shows another embodiment. In this embodiment, the gateway X delegates the function to a further gateway Y with trust relationship with nodes B and C. Functions can be shifted among gateways as long as a chain of trust from one end node to the other end node exists, i.e. a trust relationship between the gateways X and Y is given. Preferably, gateway Y also has set up a trust relationship with node A, so that there is a direct trust relationship with the node that assumes a function on behalf of node A. A trust relationship between gateway X (i.e. the gateway that forwards the function assumption to a further gateway) and the end nodes B and C is not required. Generally, delegation from gateway X to gateway Y is useful if gateway Y is the better choice for performing the function, e.g. because gateway X does not have the capabilities or resources to perform the function. In Fig. 7 gateway X generates a notification for gateway Y in case an event is received. The notification triggers event processing with gateway Y, e.g. sending requests to the end nodes B and C.

The idea of control delegation is based on separation of control plane and user plane. This allows intermediate gateways (e.g. mobile NAT) to optimize the communication without breaking the end-to-end security. To be more explicit: the function delegation is arranged with some different mechanism (protocol) and is not integrated into established protocols supporting the respective function at the end node, e.g. protocols dealing with the secured end-to-end mobility (MIP, HIP, IPsec).

This invention enables intermediate gateways (mobile NAT) to generate HIP/MIP location updates (Fig. 8).

The basic HIP (user plane) provides locator independent transport only, while the location updates (control plane) will be sent using a separate protocol outside end-to-end IPsec tunnels. The protocol messages (control plane) require a different security model: a trust relationship between neighboring gateways, building a chain-of-trust along the signaling path (as shown in Fig. 7).

In the message flow chart of Fig. 8 only three points (two end points and an intermediate gateway) of this chain-of-trust are shown. The message exchange can be readily extended to a more complex scenario in line with Fig. 7. The message flow works as follows:
(1) After establishing mutual trust between neighboring gateways along the signaling path the node A entitles mobile NAT to send location updates on its behalf.
   The Node A may optionally send a copy of the function delegation request to Node B and cipher it by a shared secret of the Nodes A and B. This could be done to increase the degree of security by avoiding that a malicious (hacked) mobile NAT node may abuse the trust relationship towards B.
(2) Optionally, the node B may want to confirm each entitlement for an intermediate gateway to send messages to node B on behalf of other node. The entitled gateway thus asks node B for approval to act on behalf of node A.
(3) Incoming traffic is sent to IP A, which was registered during the initial location update. The mobile NAT translates source address IP A → IP X.
(4) The mobile NAT connects to a second provider and obtains another global address. The mobile NAT performs handover, and sends a location update on behalf of the node A.
   This control plane function is implemented in a separate protocol to transport the necessary signaling information between the intermediate node and node B. The information that needs to be transferred comprises:
   - identity of the node, which is associated with the location update
   - updated locator information (i.e. the current care-of-address and additional properties)
   - the list of recipients, who should receive the location update
(5) The incoming traffic is now sent to IP B, which was registered during the recent location update.

With the above mobility support for intermediate nodes, operators may decide to implement NAT not just for static hotspot networks but for WLANs in a moving environment as well. In state of the art mobile networks, devices behind the NAT would not notice any changes of the allocated IP address.

Subsequently these devices would lose connection with peer nodes.

The solution described here allows location updates to be delegated from the mobile nodes to an intermediate node without breaking the security associations that have been established for communicating peers, i.e. the intermediate device would not have to pretend to be a device behind the NAT.

With the proposed solution, existing mobility protocols do not have to be extended since control and user plane functions can be implemented with different protocols.

## Claims

1. Method for controlling protected connections between end nodes (A, B), including the steps of
- establishing a trust relationship between a first end node (A) and an intermediate node,
- establishing a trust relationship between the intermediate node and a second end node (B), and
- requesting the intermediate node to perform a control function for controlling a protected connection between the first and the second end node.

2. The method of claim 1, further including
- sending a request from the intermediate node to the second node (B) for performing the control function.

3. The method of the preceding claims, further comprising
- sending a request from the intermediate node to the second end node (B) to obtain approval to perform the control function, and
- sending a reply message from the second node (B) to the intermediate node whereby approval to perform the control function via-à-vis the second node (B) is granted.

4. The method of the preceding claims, further including
- sending a message from the first end node (A) to the intermediate node for request the intermediate node to perform the control function.

5. The method of one of the preceding claims, further comprising
- providing a request to perform the control function from a first intermediate node (X) to a second intermediate node (Y).

6. The method of claim 5, further comprising
establishing a trust relationship between the first intermediate node (X) and the second intermediate node (Y) prior to providing the request.

7. The method of claim 5 or claim 6, further comprising selecting the second intermediate node (Y) based on selection criteria prior to providing the request.

8. An end node (A, B), comprising means for performing a method according to one of the claims 1 to 7.

9. An intermediate node, comprising means for performing a method according to one of the claims 1 to 7.

10. The intermediate node of claim 9, **characterized in that** the intermediate node is a gateway.
